# EUROPÄISCHE PATENTSCHRIFT

(11) **EP 1 167 809 B1**
(45) Veröffentlichungstag und Bekanntmachung des Hinweises auf die Patenterteilung: **12.10.2005**
(21) Anmeldenummer: 01114711.3
(22) Anmeldetag: 21.06.2001
(51) Int. Cl.: F16F 9/30, B32B 15/08

(54) **Schall- und schwingungsdämpfendes Metallband, Formteil und Verfahren zur Herstellung eines schall- und schwingungsdämpfenden Metallbandes**
Sound- and vibration-damping metal strip, mould and process for its manufacture
Ruban métallique amortisseur de vibrations et de bruit, moule et procédé de fabrication d'un tel

(30) Priorität: 28.06.2000 DE 10031318
(43) Veröffentlichungstag der Anmeldung: 02.01.2002
(73) Patentinhaber: ALCAN DEUTSCHLAND GMBH, D-37075 Göttingen (DE)
(72) Erfinder: Simons, Jan-Peter, 37085 Göttingen (DE); Weitsch, Hans-Eckard, 37079 Göttingen (DE); Pohl, Fred-Roderich, 37120 Bovenden (DE)
(74) Vertreter: HOFFMANN EITLE

(56) Entgegenhaltungen:
- EP-A- 0 027 945
- DE-B- 1 201 083
- DE-C- 19 530 122
- US-A- 3 193 049
- US-A- 4 223 073
- US-A- 4 374 883
- US-A- 5 063 098
- US-A- 5 416 962
- US-A- 5 855 353
- PATENT ABSTRACTS OF JAPAN vol. 015, no. 039 (M-1075), 30. Januar 1991 (1991-01-30) & JP 02 277625 A (KAWASAKI STEEL CORP), 14. November 1990 (1990-11-14)

## Beschreibung

### Technisches Gebiet

Die Erfindung betrifft ein Metallband nach dem Oberbegriff des Anspruchs 1 und insbesondere ein Metallband zur Herstellung von Formteilen, welche im Verbund mit Karosserieteilen o.ä. schwingungsdämpfend wirken, welches Metallband mit einer Schicht aus haftendem viskoelastischem Kunststoff versehen und aufrollbar ist. Die Erfindung betrifft weiter ein Verfahren zur zur Herstellung eines Metallbandes nach dem Oberbegriff des Anspruchs 6.

Zur Verkleidung und/oder Versteifung von Bauteilen, die Schwingungen ausgesetzt sind, werden insbesondere im Karosseriebau überwiegend Metallbleche eingesetzt. Im Automobilbau dienen solche Bleche beispielsweise zur Schwingungsdämpfung von Kotflügeln, Hauben, Türen, etc.. Die Bleche können nicht immer durch Sicken, Einprägungen, etc. versteift werden, so dass sie bei äußerer Anregung zu Schwingungen und entsprechender Körperschallabstrahlung neigen. Diese Schallabstrahlung erfolgt in Frequenzen, die vom menschlichen Ohr als unangenehm empfunden werden. Die Schwingungen können außerdem zu Materialermüdung, Rissen und Brüchen führen.

### Stand der Technik

Eine gängige Möglichkeit der Schwingungsdämpfung von Karosserieteilen besteht darin, Kunststoff- und/oder Bitumenmassen in Zuschnittform (allgemein als Schalldämpfmatten bekannt) zu verwenden, die auf die schwingungsbehafteten Bauteile aufgeklebt, aufgeschmolzen oder aufgespritzt werden. Abgesehen davon, dass diese Schalldämpfmatten ein relativ hohes Gewicht aufweisen, ist ihre optische Erscheinungsform wenig ansprechend. Des weiteren sind die Schalldämpfmatten zwar schwer entflammbar, aber doch brennbar. Außerdem besteht die Gefahr der Versprödung und Brüchigkeit durch Alterung sowie durch tiefe und hohe Temperaturen. Auch die Entsorgung bzw. das Recycling der Schalldämpfmatten bzw. des Verbundes gestaltet sich schwierig, insbesondere da die Schalldämpfmatten toxische Stoffe enthalten können.

Alternativ sind Dämpfmassen bekannt, die auf die schwingungsbehafteten Bauteile aufgespritzt werden. Sie weisen jedoch die gleichen Nachteile wie die Schalldämpfmatten auf. Darüber hinaus entsteht hier eine zusätzliche Umweltbelastung durch Lösemittel beim Aufspritzen.

Zur Schwingungsdämpfung sind ferner - beispielsweise aus der US 5,063,098 oder der DE-OS 26 09 763, - Sandwich-Systeme bekannt, die aus zumindest zwei Blechen und dazwischenliegenden Kunststoffschichten bestehen. Insbesondere bei der Verwendung von viskoelastischem Kunststoff können mit diesen Sandwichblechen hohe Körperschalldämpfungswerte realisiert werden. Nachteilig an diesen Sandwichsystemen sind jedoch das durch die Metallschichten bedingte hohe Gewicht und der hohe Preis. Im übrigen sind die Sandwichbleche meist nur wenig verformungsfähig, so dass dreidimensionale Formteile damit nur bedingt realisiert werden können.

Eine weitere Möglichkeit zur Schwingungsdämpfung besteht schließlich darin, die schwingungsbehafteten Bauteile selbst aus Werkstoffen mit hoher Eigendämpfung, z.B. aus Kunststoffen, herzustellen. Nachteilig sind hier wiederum der hohe Preis und das problematische Recycling, außerdem gewähren diese Kunststoffteile meist nur eine schwache Energievernichtung bei Unfällen.

US 3,193,049 beschreibt eine schalldämpfende Materialbahn mit einer Trägerfolie und einer darauf aufgebrachten selbstklebenden schallabsorbierenden Kunststoffschicht. Die der Kunststoffschicht abgewandte Seite der Trägerfolie kann antihaftbeschichtet sein.

US 5,063,098 offenbart schwingungsdämpfende Materialien aus mehreren Schichten; beispielsweise können eine viskoelastische Schicht und eine Haftschicht zwischen zwei Metallblechen vorgesehen sein.

Dokument US-A-5 855 353 zeigt die Merkmale des Oberbegriffs von Anspruch 1.

### Darstellung der Erfindung

Der Erfindung liegt die Aufgabe zugrunde, ein Metallband, insbesondere ein Metallband zur Herstellung von schwingungsdämpfenden Formteilen, zu schaffen, das kostengünstig herstellbar ist und gleichzeitig möglichst wenig Probleme bei der Entsorgung bereitet, sowie ein Verfahren zur Herstellung eines solchen Metallbandes.

Die Lösung dieser Aufgabe erfolgt gemäß einem ersten Aspekt der Erfindung durch das im Anspruch 1 beschriebene Metallband.

Einzelnen Merkmalen der Erfindung zufolge ist ein Metallband mit einer Schicht aus haftendem viskoelastischem Kunststoff versehen. Das Metallband weist eine filmartige Beschichtung zur Haftverhinderung auf, so dass es zu Lagerungs- und Transportzwecken aufrollbar ist, ohne daß der haftende Kunststoff mit der dem Klebstoff abgewandten Seite des Metallbands verklebt.

Die filmartige haftverhindernde Beschichtung befindet sich auf der haftenden Kunststoffschicht. Dies hat den besonderen Vorteil, dass die haftende Kunststoffschicht während der Verarbeitung des Metallbands zu Metallpads optimal durch die filmartige haftverhindernde Beschichtung geschützt ist.

Durch Bearbeiten dieses Metallbands mit Schneid- und ggf. Formwerkzeugen erhält man ebene oder mehrdimensionale Formteile oder Metallpads, die auf schwingungsbehaftete Bauteile aufgeklebt werden können. Diese Metallpads zeichnen sich durch ihr vorteilhaft geringes Gewicht aus, da sie lediglich eine einzige Metallschicht aufweisen. Je nach Dicke der Pads (ca. 0,05 bis 1,0 mm, vorzugsweise 0,1 bis 0,3 mm) und abhängig vom verwendeten Material liegt das Gewicht bei 135 bis 2700 g/m².

Die Metallpads können zur Schwingungsdämpfung von Karosserie- und Blechstrukturen an Fahrzeugen zu Lande, zu Wasser und in der Luft sowie von Maschinenteilen eingesetzt werden. Ebenso sind sie verwendbar für Geräte, die hoher Schwingungsbelastung mit entsprechender Schallabstrahlung ausgesetzt sind (z.B. Strauchhäcksler, Rasenmäher).

Ein weiterer Vorteil des erfindungsgemäßen Metallbands besteht in der hervorragenden Recyclierbarkeit. Eine einfache Recyclierbarkeit eines mit einem erfindungsgemäßen Metallpad beklebten Bauteils wird insbesondere bei vorteilhafter Paarung der Metalle, beispielsweise bei der Verwendung eines Aluminiumpads auf Aluminium oder eines Stahlpads auf Stahl, erreicht.

Auch hinsichtlich der Brennbarkeit weist das erfindungsgemäße Metallband vorteilhafte Eigenschaften auf. Metalle sind im allgemeinen nicht brennbar. Der Dämpfklebstoff, vorzugsweise im Bereich von 10 bis 100µm, stellt keine Gefahr dar, da er vorzugsweise auf Acrylharzbasis aufgebaut ist.

Im übrigen ist insbesondere bei der Verwendung von Aluminiumpads eine hervorragende Verformbarkeit gegeben, so dass auch mehrdimensional geformte Teile, wie Kotflügel, Hauben, Türen, Dächer, etc., optimal mit den Metallpads beklebt werden können.

Ein weiterer Vorteil der erfindungsgemäßen Metallpads besteht in ihrer Korrosionsbeständigkeit. Der Dämpfklebstoff ist chemisch neutral und verhindert Kontaktkorrosion, die beispielsweise zwischen Türhaut und Metallpad auftreten könnte. Daher kann auch eine Stahltür mit einem erfindungsgemäßen Metallpad aus Aluminium sehallgedämpft werden.

Schließlich entsteht bei der Herstellung und Verwendung der erfindungsgemäßen Metallpads keine Gefahr für die Umwelt, da keine toxischen Inhaltsstoffe in den Pads vorhanden sind.

Das erfindungsgemäße Metallband kann ferner beispielsweise in einem Coil-Coating-Prozess farbig vorlackiert werden, so dass dementsprechend bereits farbige Metallpads hergestellt werden können. In diesem Zusammenhang ist es auch denkbar, das Metallband und damit die zu fertigenden Pads reflektierend, fluoreszierend, phosphoreszierend oder lumineszierend zu lackieren bzw. so zu folieren, dass beispielsweise die Innenseite des Kofferraumdeckels mit einem ein- oder mehrfarbigem Metallpad versehen werden kann, so dass im Fall einer Panne oder eines Unfalls durch den aufgestellten Kofferraumdeckel ein gut erkennbarer Warnhinweis gegeben wird.

Bevorzugte Weiterbildungen des erfindungsgemäßen Metallbandes sind in den weiteren Ansprüchen beschrieben.

Die haftverhindernde Schicht ist vorzugsweise als Papier-, Kunststoff- oder Aluminiumfolie ausgeführt. Während der Verarbeitung des Metallbands zu Metallpads ist die haftende Kunststoffschicht optimal durch die Abdeckfolie geschützt. Vor dem Aufkleben eines Metallpads auf ein schwingungsbehaftetes Bauteil kann die Abdeckfolie einfach abgezogen werden.

Zur Ausführung der viskoelastischen Kunststoffschicht bestehen mehrere Möglichkeiten. Zum einen kann die viskoelastische Kunststoffschicht selbstklebend ausgeführt werden. In einem einzigen Arbeitsgang kann so eine haftende und gleichzeitig dämpfende Schicht auf das Metallband aufgetragen werden. Ebenso gut kann jedoch zunächst eine viskoelastische Kunststoffschicht aufgetragen und diese anschließend mit einem Klebstoff beschichtet werden.

Erfindungsgemäß ist die viskoelastische Kunststoffschicht ein beidseitig viskoelastisch ausgeführtes Klebeband - bestehend z.B. aus Kunststoffband als Trägerfolie, beidseitig mit viskoelastischem und haftendem Klebstoff versehen

Versuche haben ergeben, dass als Material für das Metallband vorzugsweise Aluminium, eine Aluminiumlegierung, Zink oder Stahl verwendet wird. Diese Materialien zeichnen sich in der entsprechenden Dicke und Ausführung durch ein geringes Gewicht und eine gute Verformbarkeit aus.

Die Lösung der oben genannten, der Erfindung zugrundeliegenden Aufgabe erfolgt gemäß einem zweiten Aspekt der Erfindung durch das im Anspruch 6 beschriebene Verfahren. Bevorzugte Weiterbildungen des erfindungsgemäßen Verfahrens ergeben sich aus den weiteren Ansprüchen, deren Verfahrensmerkmale im wesentlichen den vorangehend geschilderten bevorzugten Ausführungsformen des dadurch erzeugten Metallbandes entsprechen.

## Patentansprüche

1. Metallband zur Herstellung von schwingungsdämpfenden Formteilen, das mit einer Schicht aus haftendem viskoelastischem Kunststoff versehen ist und das aufrollbar ist, wobei sich eine filmartige haftverhindernde Beschichtung auf der haftenden Kunststoffschicht befindet,
**dadurch gekennzeichnet, dass** die viskoelastische Kunststoffschicht ein beidseitig viskoelastisch ausgeführtes Klebeband, insbesondere ein beidseitig mit viskoelastischem und haftendem Klebstoff versehenes Kunststoffband ist.

2. Metallband nach Anspruch 1, wobei die haftverhindernde Schicht eine Abdeckfolie, insbesondere eine Papier-, Kunststoff- oder eine beschichtete Aluminium-Folie oder eine Mischung daraus, ist.

3. Metallband nach einem der Ansprüche 1 und 2, wobei die viskoelastische Kunststoffschicht selbstklebend ist.

4. Metallband nach einem der Ansprüche 1 bis 3, wobei die viskoelastische Kunststoffschicht mit einem Klebstoff beschichtet ist.

5. Metallband nach einem der vorangehenden Ansprüche, wobei das Metallband aus Aluminium, einer Aluminiumlegierung, Zink oder Stahl besteht.

6. Verfahren zur Herstellung eines Metallbands nach einem der Ansprüche 1 bis 5, wobei ein Metallband vorzugsweise entfettet, vorzugsweise gereckt, eventuell vorbehandelt und einseitig mit einem haftenden viskoelastischen Kunststoff beschichtet wird, wobei eine filmartige haftverhindernde Beschichtung auf die haftende Kunststoffschicht aufgebracht wird,
**dadurch gekennzeichnet, dass** als Kunststoffschicht ein beidseitig viskoelastisch ausgeführtes Klebeband, insbesondere ein beidseitig mit viskoelastischem und haftendem Klebstoff versehenes Kunststoffband, auf das Metallband aufgebracht wird.

7. Verfahren nach Anspruch 6, wobei zur Herstellung der haftenden viskoelastischen Kunststoffschicht nacheinander eine viskoelastische Kunststoffschicht und eine Klebstoffschicht aufgebracht werden.

8. Verfahren nach Anspruch 6 oder 7, wobei die haftverhindernde Schicht eine Abdeckfolie ist.

9. Verfahren nach einem der Ansprüche 6 bis 8, wobei das Metallband anschließend zu Formaten geschnitten wird, die mit Formwerkzeugen zu Formteilen gepresst werden.

10. Verfahren nach Anspruch 9, wobei die Formteile stapelbar sind.

## Claims

1. Metal tape for producing vibration-damping mouldings, which is provided with a layer of adhesive viscoelastic plastic and which can be rolled up, wherein a film-like adhesion-preventing coating is situated on the adhesive plastic layer, **characterised in that** the viscoelastic plastic layer is an adhesive tape made to be viscoelastic on both sides, in particular a plastic tape provided on both sides with viscoelastic and adhesive bonding agent.

2. Metal tape according to claim 1, wherein the adhesion-preventing layer is a cover film, in particular a paper, plastic or a coated aluminium foil or a mixture thereof.

3. Metal tape according to one of claims 1 and 2, wherein the viscoelastic plastic layer is self-adhesive.

4. Metal tape according to one of claims 1 to 3, wherein the viscoelastic plastic layer is coated with a bonding agent.

5. Metal tape according to one of the preceding claims, wherein the metal tape consists of aluminium, an aluminium alloy, zinc or steel.

6. Process for producing a metal tape according to one of claims 1 to 5, wherein a metal tape is preferably degreased, preferably stretched, possibly pre-treated and coated on one side with an adhesive viscoelastic plastic, wherein a film-like adhesion-preventing coating is applied to the adhesive plastic layer, **characterised in that** an adhesive tape made to be viscoelastic on both sides, in particular a plastic tape provided on both sides with viscoelastic and adhesive bonding agent, is applied to the metal tape as the plastic layer.

7. Process according to claim 6, wherein a viscoelastic plastic layer and a bonding agent layer are applied one after another to produce the adhesive viscoelastic plastic layer.

8. Process according to claim 6 or 7, wherein the adhesion-preventing layer is a cover film.

9. Process according to one of claims 6 to 8, wherein the metal tape is then cut to form shapes which are pressed using moulds to form mouldings.

10. Process according to claim 9, wherein the mouldings can be stacked.

## Revendications

1. Ruban métallique pour la fabrication de pièces moulées amortissant les oscillations, lequel est pourvu d'une couche d'une matière plastique visco-élastique adhésive et peut être roulé, un revêtement de type pellicule empêchant l'adhérence se trouvant sur la couche plastique adhésive,
**caractérisé en ce que** la couche plastique visco-élastique est un ruban adhésif réalisé visco-élastique sur ses deux faces, en particulier un ruban plastique pourvu sur ses deux faces d'une colle visco-élastique et adhésive.

2. Ruban métallique selon la revendication 1, dans lequel la couche empêchant l'adhérence est une feuille de couverture, en particulier une feuille de papier, de matière plastique ou une feuille d'aluminium avec revêtement, ou un mélange de celles-ci.

3. Ruban métallique selon l'une des revendications 1 ou 2, dans lequel la couche plastique visco-élastique est auto-adhésive.

4. Ruban métallique selon l'une des revendications 1 à 3, dans lequel la couche plastique visco-élastique est revêtue d'une colle.

5. Ruban métallique selon l'une des revendications précédentes, dans lequel le ruban métallique est constitué d'aluminium, d'un alliage d'aluminium, de zinc ou d'acier.

6. Procédé de fabrication d'un ruban métallique selon l'une des revendications 1 à 5, dans lequel un ruban métallique est de préférence dégraissé, de préférence étiré, éventuellement prétraité et recouvert sur une face d'une matière plastique visco-élastique adhésive, dans lequel un revêtement empêchant l'adhérence de type pellicule est appliqué sur la couche plastique adhésive, **caractérisé en ce qu'**on applique sur le ruban métallique comme couche plastique un ruban adhésif réalisé visco-élastique sur ses deux faces, en particulier un ruban plastique pourvu sur ses deux faces d'une colle visco-élastique et adhésive.

7. Procédé selon la revendication 6 dans lequel on applique successivement une couche plastique visco-élastique et une couche de colle pour réaliser la couche plastique visco-élastique adhésive.

8. Procédé selon la revendication 6 ou 7 dans lequel la couche empêchant l'adhérence est une feuille de couverture.

9. Procédé selon l'une des revendications 6 à 8, dans lequel le ruban métallique est coupé ensuite en formats qui sont pressés avec des outils de formage, en pièces formées.

10. Procédé selon la revendication 9, dans lequel les pièces formées sont empilables.
